# EUROPEAN PATENT SPECIFICATION

(11) **EP 1 987 963 B1**
(45) Date of publication and mention of the grant of the patent: **13.04.2016**
(21) Application number: 08006086.6
(22) Date of filing: 28.03.2008
(51) Int. Cl.: B60C 9/20, B60C 9/22

(54) **Tire for motorcycle**
Reifen für ein Motorrad
Pneu pour motocyclette

(30) Priority: 02.05.2007 JP 2007121796
(43) Date of publication of application: 05.11.2008
(73) Proprietor: Sumitomo Rubber Industries, Ltd., Hyogo-ken (JP)
(72) Inventor: Suzuki, Shigehiko, Chuo-ku, Kobe-shi Hyogo 651-0072 (JP)
(74) Representative: Manitz, Finsterwald & Partner GbR

(56) References cited:
- EP-A1- 1 495 881
- EP-A2- 1 859 961
- JP-A- H0 524 409
- JP-A- H0 624 207
- US-A1- 2006 000 535

## Description

### BACKGROUND OF THE INVENTION

### Field of the Invention

The present invention relates to a tire for a motorcycle. The features of the preamble of the independent claim are known from US 2006/000535 A1. Related technologies are known from JP H06 24207 A and EP 1 495 881.

### Description of the Related Art

In some cases, a radial tire is employed for a tire to be attached to a motorcycle. The tire comprises a pair of beads, a carcass laid between both of the beads, and a belt positioned on an outside in a radial direction of the carcass. An example of the tire has been disclosed in US5529102 (Japanese Laid-Open Patent Publication No. 8-48109).

In the tire, a carcass is formed by a carcass ply having a carcass cord. The carcass cord is usually constituted by a nylon fiber.

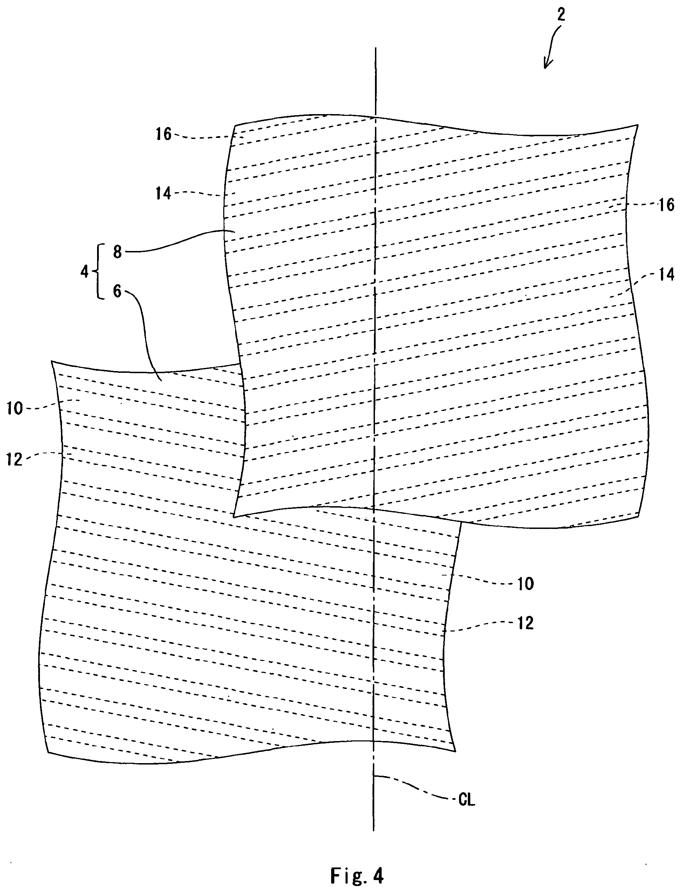

Fig. 4 is an enlarged plan view showing a part of a belt 4 of a conventional tire 2. In Fig. 4, a one-dotted chain line CL indicates an equator plane. The belt 4 of the tire 2 includes a first belt ply 6 and a second belt ply 8. The first belt ply 6 is formed by a belt cord 10 and a topping rubber 12. The belt cord 10 is inclined to the equator plane. The second belt ply 8 includes a belt cord 14 and a topping rubber 16. The belt cord 14 is inclined to the equator plane. As shown in Fig. 4, an inclining direction of the belt cord 10 of the first belt ply 6 is reverse to that of the belt cord 14 of the second belt ply 8. The belt cords 10 and 14 are usually formed by a nylon fiber.

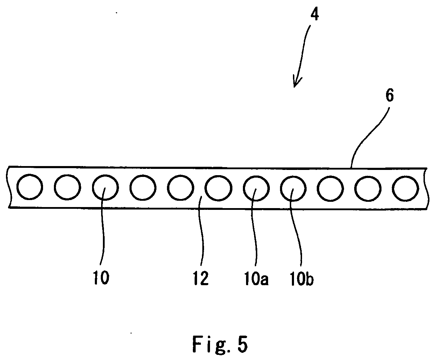

Fig. 5 is an enlarged sectional view showing a part of the belt 4 in Fig. 4. Fig. 5 shows a part of the first belt ply 6. Fig. 5 shows a section which is perpendicular to a longitudinal direction of the belt cord 10. As shown in Fig. 5, a large number of belt cords 10 are provided in parallel with each other in the first belt ply 6.

As described above, in the conventional tire 2, the nylon fiber is used for the materials of the carcass cord and the belt cords 10 and 14. The nylon fiber has a lower heat resistance than that of each of a polyester fiber, a rayon fiber, a polyethylene naphthalate fiber and an aramid fiber to be organic fibers which can be used in a tire component. In the tire 2, a heat generated in the tire 2 during running influences a stiffness of the tire 2. In the tire 2, the stiffness during the running fluctuates greatly. For this reason, the tire 2 has a straight running stability and a cornering property which are poor.

The aramid fiber is excellent in the heat resistance. In a tire in which the belt cords 10 and 14 formed by the nylon fiber are replaced with a belt cord formed by the aramid fiber, a fluctuation in a stiffness during running is small. However, the belt cord formed by the aramid fiber has a higher modulus than that of each of the belt cords 10 and 14 formed by the nylon fiber. For this reason, the tire has an excessive stiffness. The excessive stiffness influences a ride comfort of the tire.

It is an object of the present invention to provide a tire for a motorcycle which is excellent in a straight running stability and a cornering property without damaging a ride comfort.

### SUMMARY OF THE INVENTION

A tire for a motorcycle according to the present invention comprises a pair of beads, a carcass laid over both of the beads, a belt positioned on an outside in a radial direction of the carcass, and a band positioned on an outside in the radial direction of the belt. The carcass includes a carcass ply having a carcass cord. The carcass cord is constituted by a rayon fiber or an aramid fiber. The belt includes a belt ply having a belt cord. The belt cord is constituted by an aramid fiber. The belt cord has a fineness which is equal to or greater than 1400 dtex and is equal to or smaller than 1600 dtex. The belt cord has a density which is equal to or higher than 20 ends / 5 cm and is equal to or lower than 30 ends / 5 cm. An absolute value of an angle formed by the belt cord with respect to an equator plane is equal to or greater than 60 degrees and is equal to or smaller than 90 degrees. The band includes a band ply having a band cord. The band cord is wound spirally in a substantially circumferential direction. An absolute value of an angle formed by the band cord with respect to, the equator plane is equal to or smaller than 5 degrees.

In the tire, it is preferable that the band cord should be constituted by an aramid fiber or steel.

In the tire, the carcass cord is constituted by the rayon fiber or the aramid fiber. The belt cord is constituted by the aramid fiber. In the tire, the carcass cord and the belt cord are excellent in a heat resistance. Therefore, a stiffness during running less fluctuates. The tire is excellent in a straight running stability and a cornering property. A fineness of the belt cord is smaller than that of a belt cord of a conventional tire. The density of the belt cord is lower than that of the belt cord of the conventional tire. In the tire, the stiffness is maintained properly. Therefore, a ride comfort can be prevented from being damaged.

### BRIEF DESCRIPTION OF THE DRAWINGS

Fig. 1 is a sectional view showing a part of a pneumatic tire according to an embodiment of the present invention,
Fig. 2 is an enlarged plan view showing a part of a belt of the tire in Fig. 1,
Fig. 3 is an enlarged sectional view showing a part of the belt in Fig. 2,
Fig. 4 is an enlarged plan view showing a part of a belt of a conventional tire, and
Fig. 5 is an enlarged sectional view showing a part of the belt in Fig. 4.

### DESCRIPTION OF THE PREFERRED EMBODIMENTS

The present invention will be described below in detail based on a preferred embodiment with reference to the drawings.

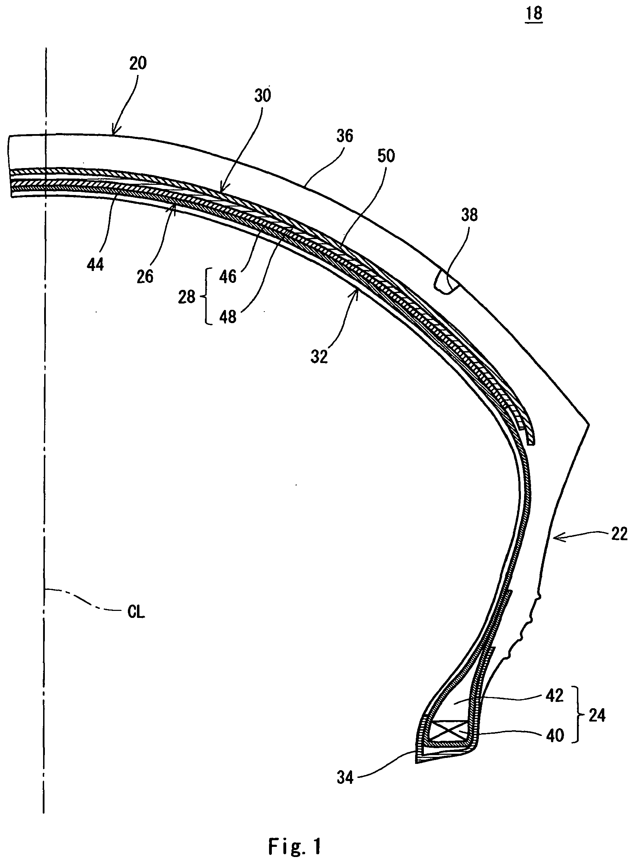

A pneumatic tire 18 shown in Fig. 1 comprises a tread 20, a sidewall 22, a bead 24, a carcass 26, a belt 28, a band 30, an inner liner 32 and a chafer 34. The tire 18 is of a tubeless type. The tire 18 is attached to a motorcycle. In Fig. 1, a vertical direction is set to be a radial direction, a transverse direction is set to be an axial direction, and a perpendicular direction to a paper is set to be a circumferential direction. The tire 18 takes an almost symmetrical shape about a one-dotted chain line CL in Fig. 1. The one-dotted chain line CL represents an equator plane of the tire 18.

The tread 20 is formed by a crosslinked rubber which is excellent in an abrasion resistance. The tread 20 takes the shape of an outward convex in the radial direction. The tread 20 includes a tread surface 36. The tread surface 36 comes in contact with a road surface. A groove 38 is provided on the tread surface 36. By the groove 38, a tread pattern is formed. The groove 38 does not need to be provided on the tread 20.

The sidewall 22 is extended almost inward in the radial direction from an end of the tread 20. The sidewall 22 is formed by a crosslinked rubber. The sidewall 22 absorbs a shock from the road surface by a flexure. Furthermore, the sidewall 22 prevents the external damage of the carcass 26.

The bead 24 is positioned almost inward in the radial direction from the sidewall 22. The bead 24 includes a core 40 and an apex 42 extended outward in the radial direction from the core 40. The core 40 is ring-shaped. The core 40 includes a plurality of non-extensible wires (typically wires formed of steel). The apex 42 is outward tapered in the radial direction. The apex 42 is formed by a crosslinked rubber having a high hardness.

The carcass 26 is formed by a carcass ply 44. The carcass ply 44 is laid between the beads 24 on both sides along the insides of the tread 20 and the sidewall 22. The carcass ply 44 is folded back from an inside toward an outside in the axial direction around the core 40. Two sheets or more of the carcass plies 44 maybe used for the carcass 26.

The carcass ply 44 is constituted by a large number of carcass cords provided in parallel with each other and a topping rubber, which is not shown. An absolute value of an angle formed by each of the carcass cords with respect to the equator plane is usually 70 to 90 degrees. In other words, the carcass 26 has a radial structure. The tire 18 is a radial tire. The carcass cord is constituted by a rayon fiber or an aramid fiber.

The belt 28 is positioned on an outside in the radial direction of the carcass 26. The belt 28 is provided on the carcass 26. The belt 28 reinforces the carcass 26. The belt 28 is constituted by a first belt ply 46 and a second belt ply 48. The second belt ply 48 is positioned on an outside in the radial direction of the first belt ply 46.

The band 30 is positioned on an outside in the radial direction of the belt 28. The band 30 is formed by a band ply 50. The band ply 50 covers the belt 28. The band ply 50 is constituted by a band cord and a topping rubber, which is not shown. The band cord is extended in a substantially circumferential direction and is wound spirally. The band 30 has a so-called jointless structure. The belt 28 is constrained by the band cord. Therefore, lifting of the belt 28 is suppressed. An absolute value of an angle formed by the band cord with respect to the equator plane is equal to or smaller than 5 degrees, particularly, is equal to or smaller than 2 degrees. In the present invention, a direction in which an absolute value of an angle formed in the circumferential direction is equal to or smaller than 5.0 degrees is set to be the "substantially circumferential direction". In the tire 18, the band cord is constituted by an aramid fiber or steel.

The inner liner 32 is bonded to an inner peripheral surface of the carcass 26. The inner liner 32 is formed by a crosslinked rubber. A rubber having an excellent air insulating property is used for the inner liner 32. The inner liner 32 plays a part in holding the internal pressure of the tire 18.

The chafer 34 is positioned in the vicinity of the bead 24. When the tire 18 is incorporated into a rim, the chafer 34 abuts on the rim. By the abutment, the vicinity of the bead 24 is protected. The chafer 34 is usually constituted by a cloth and a rubber impregnated in the cloth. It is also possible to use the chafer 34 formed by a single rubber.

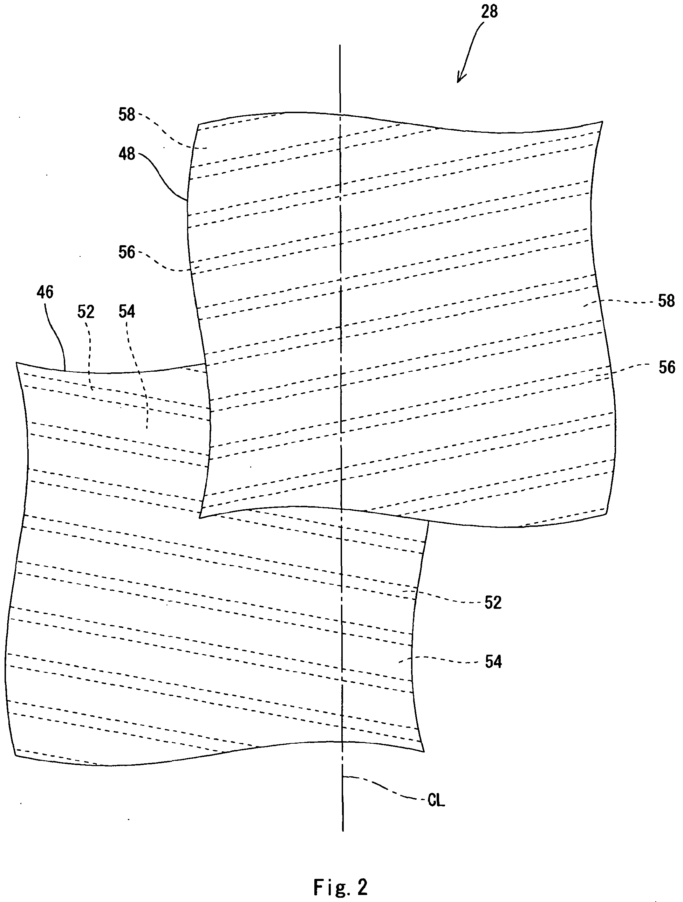

Fig. 2 is an enlarged plan view showing a part of the belt 28 of the tire 18 in Fig. 1. Fig. 2 shows a part of the first belt ply 46 and the second belt ply 48. In Fig. 2, a one-dotted chain line CL indicates the equator plane of the tire 18.

The first belt ply 46 is formed by a large number of belt cords 52 which are provided in parallel with each other and a topping rubber 54. Each of the belt cords 52 is inclined to the equator plane. An absolute value of an angle formed by the belt cord 52 with respect to the equator plane is equal to or greater than 60 degrees and is equal to or smaller than 90 degrees. A tire having the absolute value of the angle set to be equal to or greater than 60 degrees is excellent in a cornering property. From this viewpoint, it is preferable that the absolute value of the angle should be equal to or greater than 70 degrees. In a tire having the absolute value of the angle set to be equal to or smaller than 90 degrees, an excellent cornering property can be maintained. From this viewpoint, it is preferable that the absolute value of the angle should be equal to or smaller than 85 degrees. The belt cord 52 is constituted by an aramid fiber.

The second belt ply 48 is formed by a large number of belt cords 56 which are provided in parallel with each other and a topping rubber 58. Each of the belt cords 56 is inclined to the equator plane. An absolute value of an angle formed by the belt cord 56 with respect to the equator plane is equal to or greater than 60 degrees and is equal to or smaller than 90 degrees. A tire having the absolute value of the angle set to be equal to or greater than 60 degrees is excellent in a cornering property. From this viewpoint, it is preferable that the absolute value of the angle should be equal to or greater than 70 degrees. In a tire having the absolute value of the angle set to be equal to or smaller than 90 degrees, an excellent cornering property can be maintained. From this viewpoint, it is preferable that the absolute value of the angle should be equal to or smaller than 85 degrees. The belt cord 56 is constituted by an aramid fiber. In the tire 18, when the absolute values of the angles formed by the belt cords 52 and 56 with respect to the equator plane are smaller than 90 degrees, an inclining direction of the belt cord 56 of the second belt ply 48 is reverse to that of the belt cord 52 of the first belt ply 46.

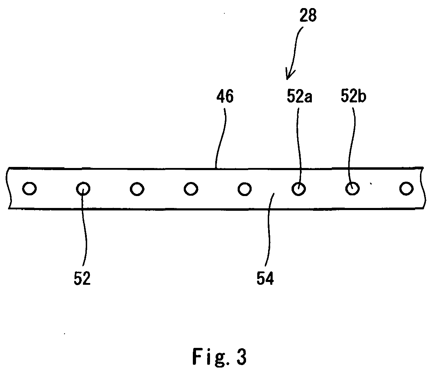

Fig. 3 is an enlarged sectional view showing a part of the belt 28 in Fig. 2. Fig. 3 shows the first belt ply 46. As shown in Fig. 3, in the tire 18, the belt cord 52 has a smaller thickness than the belt cord 10 of the conventional tire 2 (see

Fig. 5). In other words, a fineness of the belt cord 52 is smaller than that of the belt cord 10 in the conventional tire 2.

In the tire 18, the belt cord 52 is constituted by the aramid fiber, and therefore, has a high modulus. As described above, the fineness of the belt cord 52 is smaller than that of the belt cord 10 in the conventional tire 2. For this reason, even if the aramid fiber is used for a material of the belt cord 52 in the tire 18, a stiffness can be maintained properly. In the tire 18, it is possible to prevent a ride comfort from being damaged.

In the tire 18, a fineness of the belt cord 56 of the second belt ply 48 is equal to that of the belt cord 52 of the first belt ply 46, which is not shown. Accordingly, the fineness of the belt cord 56 is smaller than that of the belt cord 10 in the conventional tire 2. Even if the aramid fiber is used for a material of the belt cord 56 in the tire 18, the stiffness can be maintained properly. In the tire 18, it is possible to prevent the ride comfort from being damaged.

As shown in Fig. 3, an interval between a belt cord 52a and another belt cord 52b which is adjacent to the belt cord 52a is greater than an interval between a belt cord 10a and another belt cord 10b which is adjacent to the belt cord 10a in the conventional tire 2 (see Fig. 5). In other words, a density of the belt cord 52 in the tire 18 is lower than that of the belt cord 10 in the conventional tire 2. Even if the aramid fiber is used for the material of the belt cord 52, therefore, the stiffness can be maintained properly. In the tire 18, it is possible to prevent the ride comfort from being damaged.

In the tire 18, a density of the belt cord 56 of the second belt ply 48 is equal to that of the belt cord 52 of the first belt ply 46, which is not shown. Accordingly, the density of the belt cord 56 is lower than that of the belt cord 10 in the conventional tire 2. Even if the aramid fiber is used for the material of the belt cord 56, therefore, the stiffness can be maintained properly. In the tire 18, it is possible to prevent the ride comfort from being damaged.

As described above, in the tire 18, the belt cord 52 of the first belt ply 46 and the belt cord 56 of the second belt ply 48 are constituted by the aramid fiber. The belt cords 52 and 56 are more excellent in a heat resistance than the belt cord 10 constituted by a nylon fiber in the conventional tire 2. In the tire 18, a fluctuation in the stiffness during the running is small. The tire 18 is excellent in a straight running stability and a cornering property.

As described above, in the tire 18, the carcass cord of the carcass ply 44 is constituted by the rayon fiber or the aramid fiber. The carcass cord is more excellent in a heat resistance than a carcass cord constituted by a nylon fiber. In the tire 18, the fluctuation in the stiffness during the running is small. The tire 18 is excellent in the straight running stability and the cornering property.

As described above, in the tire 18, the band cord of the band ply 50 is constituted by the aramid fiber or the steel. The band cord has a high strength. The band cord effectively constrains the belt 28. Therefore, the lifting of the belt 28 can be prevented. The band cord is excellent in a heat resistance. For this reason, in the tire 18, the fluctuation in the stiffness during the running is small. The tire 18 is excellent in the straight running stability and the cornering property.

In the tire 18, the carcass cord of the carcass ply 44, the belt cord 52 of the first belt ply 46, the belt cord 56 of the second belt ply 48 and the band cord of the band ply 50 are excellent in a heat resistance. In the tire 18, the fluctuation in the stiffness during the running is small. Also on a severe condition such as a race, accordingly, the tire 18 can be used.

In the tire 18, the belt cord 52 of the first belt ply 46 has a fineness which is equal to or greater than 1400 dtex and is equal to or smaller than 1600 dtex. The fineness is set to be equal to or greater than 1400 dtex so that the belt cord 52 can contribute to the stiffness of the tire 18. The tire 18 is excellent in the straight running stability and the cornering property. The fineness is set to be equal to or smaller than 1600 dtex so that it is possible to prevent the stiffness from being excessively increased through the belt cord 52. Since the stiffness of the tire 18 is properly maintained, the ride comfort can be prevented from being damaged. The fineness is expressed in a total of a fineness of a yarn constituting the belt cord 52. A fineness of the belt cord 56 of the second belt ply 48 is also expressed in the same manner.

In the tire 18, the belt cord 52 formed by twisting two yarns having a fineness of 800 dtex is used for the first belt ply 46 in some cases. In those cases, the belt cord 52 has a fineness of 1600 dtex. A structure of the belt cord 52 is displayed in 800 dtex / 2. In the case in which the belt cord 52 formed by twisting two yarns having a fineness of 700 dtex is used for the first belt ply 46, the belt cord 52 has a fineness of 1400 dtex and the structure of the belt cord 52 is displayed in 700 dtex / 2.

In the tire 18, the belt cord 56 of the second belt ply 48 has a fineness which is equal to or greater than 1400 dtex and is equal to or smaller than 1600 dtex. The fineness is set to be equal to or greater than 1400 dtex so that the belt cord 56 can contribute to the stiffness of the tire 18. The tire 18 is excellent in the straight running stability and the cornering property. The fineness is set to be equal to or smaller than 1600 dtex so that it is possible to prevent the stiffness from being excessively increased through the belt cord 56. Since the stiffness of the tire 18 is properly maintained, the ride comfort can be prevented from being damaged.

In the tire 18, the belt cord 56 formed by twisting two yarns having a fineness of 800 dtex is used for the second belt ply 48 in some cases. In those cases, the belt cord 56 has a fineness of 1600 dtex. A structure of the belt cord 56 is displayed in 800 dtex / 2. In the case in which the belt cord 56 formed by twisting two yarns having a fineness of 700 dtex is used for the second belt ply 48, the belt cord 56 has a fineness of 1400 dtex and the structure of the belt cord 56 is displayed in 700 dtex / 2.

In the tire 18, a density of the belt cord 52 of the first belt ply 46 is equal to or higher than 20 ends / 5 cm and is equal to or lower than 30 ends / 5 cm. The density is set to be equal to or higher than 20 ends / 5 cm so that the belt 28 can contribute to the stiffness of the tire 18. The tire 18 is excellent in the straight running stability and the cornering property. By setting the density to be equal to or lower than 30 ends / 5 cm, it is possible to prevent the stiffness from being excessively increased through the belt 28. Since the stiffness of the tire 18 is maintained properly, the ride comfort can be prevented from being damaged. In the tire 18, the density is obtained by measuring the number (ends) of the belt cords 52 present per 5 cm width of the first belt ply 46 in a perpendicular section to a longitudinal direction of the belt cord 52. A density of the belt cord 56 of the second belt ply 48 which will be described below is also measured in the same manner.

In the tire 18, the density of the belt cord 56 of the second belt ply 48 is equal to or higher than 20 ends / 5 cm and is equal to or lower than 30 ends / 5 cm. The density is set to be equal to or higher than 20 ends / 5 cm so that the belt 28 can contribute to the stiffness of the tire 18. The tire 18 is excellent in the straight running stability and the cornering property. By setting the density to be equal to or lower than 30 ends / 5 cm, it is possible to prevent the stiffness from being excessively increased through the belt 28. Since the stiffness of the tire 18 is maintained properly, the ride comfort can be prevented from being damaged.

In the present invention, the dimension and the angle of each member of the tire 18 are measured in a state in which the tire 18 is incorporated in a normal rim and is filled with air to obtain a normal internal pressure. During the measurement, a load is not applied to the tire 18. In this specification, the normal rim implies a rim determined in rules on which the tire 18 depends. A "standard rim" in the JATMA rules, a "Design Rim" in the TRA rules and a "Measuring Rim" in the ETRTO rules are included in the normal rim. In this specification, the normal internal pressure implies an internal pressure determined in the rules on which the tire 18 depends. A "maximum air pressure" in the JATMA rules, a "maximum value" described in "TIRE LOAD LIMITS AT VARIOUS COLD INFLATION PRESSURES" in the TRA rules and an "INFLATION PRESSURE" in the ETRTO rules are included in the normal internal pressure.

### EXAMPLES

### [Example 1]

There was obtained a radial tire for a motorcycle according to an example 1 which has the basic structure shown in Fig. 1 and has a specification shown in the following Table 2. The tire has a size of 180/55ZR17. A carcass is formed by a carcass ply. A carcass cord of the carcass ply is constituted by a rayon fiber. An angle formed by the carcass cord with respect to an equator plane is 90 degrees. The carcass cord has a structure of 1840 dtex / 2. A belt cord of a first belt ply is constituted by an aramid fiber. The belt cord has a structure of 800 dtex / 2. Accordingly, the belt cord has a fineness of 1600 dtex. An angle formed by the belt cord with respect to an equator plane is 80 degrees. The belt cord has a density of 30 ends / 5 cm. A belt cord of a second belt ply is constituted by an aramid fiber. The belt cord has a structure of 800 dtex / 2. Accordingly, the belt cord has a fineness of 1600 dtex. An angle formed by the belt cord with respect to the equator plane is -80 degrees. The belt cord has a density of 30 ends / 5 cm. A band cord of a band ply is constituted by steel. The band cord has a structure of 3 X 3 / 0.17. The band cord is wound spirally in a circumferential direction.

### [Comparative Examples 3 and 4 and Example 5]

A tire was obtained in the same manner as in the example 1 except that the structure and the fineness of the belt cord of the first belt ply and the structure and the fineness of the belt cord of the second belt ply were set as shown in the following Tables 1 and 2.

### [Comparative Examples 1 and 6 and Example 4]

A tire was obtained in the same manner as in the example 1 except that the density of the belt cord of the first belt ply and the density of the belt cord of the second belt ply were set as shown in the following Tables 1 and 2.

### [Examples 2 and 6]

A tire was obtained in the same manner as in the example 1 except that the angle of the belt cord of the first belt ply and the angle of the belt cord of the second belt ply were set as shown in the following Tables 1 and 2.

### [Comparative Example 5 and Example 7]

A tire was obtained in the same manner as in the example 1 except that the material and the structure of the carcass cord was set as shown in the following Tables 2 and 3.

### [Example 3]

A tire was obtained in the same manner as in the example 1 except that the structure, the fineness and the density of the belt cord of the first belt ply and the structure, the fineness and the density of the belt cord of the second belt ply were set as shown in the following Table 1.

### [Comparative Example 2]

A tire was obtained in the same manner as in the example 1 except that the density of the belt cord of the first belt ply, the density of the belt cord of the second belt ply and the material and the structure of the carcass cord were set as shown in the following Table 1.

### [Example 9]

A tire was obtained in the same manner as in the example 1 except that the material and the structure of the band cord was set as shown in the following Table 3.

### [Example 8]

A tire was obtained in the same manner as in the example 1 except that the density of the belt cord of the first belt ply, the density of the belt cord of the second belt ply and the material and the structure of the band cord were set as shown in the following Table 3.

### [Comparative Example 8]

A tire was obtained in the same manner as in the example 1 except that the material and the structure of the carcass cord and the material and the structure of the band cord were set as shown in the following Table 3.

### [Comparative Example 7]

A tire was obtained in the same manner as in the example 1 except that the material and the structure of the carcass cord, the density of the belt cord of the first belt ply, the density of the belt cord of the second belt ply, and the material and the structure of the band cord were set as shown in the following Table 3.

### [Comparative Example 9]

In a comparative example 9, a conventional tire on the market is employed. In the tire, a carcass cord is constituted by a nylon fiber. A belt cord of a first belt ply and that of a second belt ply are constituted by a nylon fiber.

### [Actual Vehicle Evaluation]

A trial tire was attached to a rear wheel of a motorcycle (four cycles) on the market which has a displacement of 750 cc. A rim was set to be MT5.50 X 17 and an internal pressure of air of the tire was set to be 280 kPa. A conventional tire on the market is attached to a front wheel. A tire size of the front wheel is 120/70ZR17. A rim is MT3.50 X 17 and an internal pressure of air of the tire is 250 kPa. A lap time was measured on a circuit course constituted by a dry asphalted road. Five laps were made over the circuit course and a time was measured every lap. The shortest one of the times thus measured was set to be the lap time. The lap time is expressed in an index number with the lap time in the comparative example 7 set to be 100. It is indicated that a greater numeric value is more excellent. Furthermore, a ratio, to the lap time (second), of a difference (second) between the lap time and the time measured in succession to the lap time was calculated to obtain a proportion of the ratio to a ratio in the comparative example 7. The proportion is expressed in an index number with the proportion in the comparative example 7 set to be 100. The index number indicates a lap time reducing index. The lap time reducing index indicates that a greater numeric value is more excellent. With the measurement of the lap time, a sensuous evaluation was carried out by a rider. The result is expressed in an index number with a full mark of 5.0. It is indicated that a greater numeric value is more excellent. Evaluation items include a ride comfort, a straight running stability and a cornering property. The results are shown in the following Tables 1, 2 and 3.

**Table 1 Specification of tire and evaluation result**

| | | | Example 2 | Comp. example 1 | Example 3 | Example 4 | Comp. example 2 | Comp. example 3 |
|---|---|---|---|---|---|---|---|---|
| Carcass ply | Carcass cord | Material | Rayon | Rayon | Rayon | Rayon | Nylon | Rayon |
| | | Structure | 1840dtex/2 | 1840dtex/2 | 1840dtex/2 | 1840dtex/2 | 1400dtex/2 | 1840dtex/2 |
| First belt ply | Belt cord | Material | Aramid | Aramid | Aramid | Aramid | Aramid | Aramid |
| | | Structure | 800dtex/2 | 800dtex/2 | 700dtex/2 | 800dtex/2 | 800dtex/2 | 600dtex/2 |
| | | Fineness [dtex] | 1600 | 1600 | 1400 | 1600 | 1600 | 1200 |
| | | Angle [°] | 70 | 80 | 80 | 80 | 80 | 80 |
| | | Density [ends/5cm] | 30 | 15 | 20 | 20 | 20 | 30 |
| Second belt ply | Belt cord | Material | Aramid | Aramid | Aramid | Aramid | Aramid | Aramid |
| | | Structure | 800dtex/2 | 800dtex/2 | 700dtex/2 | 800dtex/2 | 800dtex/2 | 600dtex/2 |
| | | Fineness [dtex] | 1600 | 1600 | 1400 | 1600 | 1600 | 1200 |
| | | Angle [°] | -70 | -80 | -80 | -80 | -80 | -80 |
| | | Density [ends/5cm] | 30 | 15 | 20 | 20 | 20 | 30 |
| Band ply | Band cord | Material | Steel | Steel | Steel | Steel | Steel | Steel |
| | | Structure | 3×3/0.17 | 3×3/0.17 | 3×3/0.17 | 3×3/0.17 | 3×3/0.17 | 3×3/0.17 |
| Running test | Lap time index | | 100 | 90 | 100 | 95 | 95 | 95 |
| | Lap time reducing index | | 100 | 95 | 120 | 120 | 95 | 100 |
| | Ride comfort | | 3.5 | 4.0 | 3.5 | 3.5 | 3.5 | 3.5 |
| | Straight running stability | | 3.5 | 3.5 | 4.0 | 3.5 | 3.5 | 3.5 |
| | Cornering property | | 3.5 | 3.0 | 4.0 | 4.0 | 3.5 | 3.5 |

**Table 2 Specification of tire and evaluation result**

| | | | Example 5 | Example 1 | Comp. example 4 | Comp. example 5 | Comp. example 6 | Example 6 |
|---|---|---|---|---|---|---|---|---|
| Carcass ply | Carcass cord | Material | Rayon | Rayon | Rayon | Nylon | Rayon | Rayon |
| | | Structure | 1840dtex/2 | 1840dtex/2 | 1840dtex/2 | 1400dtex/2 | 1840dtex/2 | 1840dtex/2 |
| First belt ply | Belt cord | Material | Aramid | Aramid | Aramid | Aramid | Aramid | Aramid |
| | | Structure | 700dtex/2 | 800dtex/2 | 900dtex/2 | 800dtex/2 | 800dtex/2 | 800dtex/2 |
| | | Fineness [dtex] | 1400 | 1600 | 1800 | 1600 | 1600 | 1600 |
| | | Angle [°] | 80 | 80 | 80 | 80 | 80 | 85 |
| | | Density [ends/5cm] | 30 | 30 | 30 | 30 | 35 | 30 |
| Second belt ply | Belt cord | Material | Aramid | Aramid | Aramid | Aramid | Aramid | Aramid |
| | | Structure | 700dtex/2 | 800dtex/2 | 900dtex/2 | 800dtex/2 | 800dtex/2 | 800dtex/2 |
| | | Fineness [dtex] | 1400 | 1600 | 1800 | 1600 | 1600 | 1600 |
| | | Angle [°] | -80 | -80 | -80 | -80 | -80 | -85 |
| | | Density [ends/5cm] | 30 | 30 | 30 | 30 | 35 | 30 |
| Band ply | Band cord | Material | Steel | Steel | Steel | Steel | Steel | Steel |
| | | Structure | 3×3/0.17 | 3×3/0.17 | 3×3/0.17 | 3×3/0.17 | 3×3/0.17 | 3×3/0.17 |
| Running test | Lap time index | | 95 | 95 | 95 | 95 | 100 | 100 |
| | Lap time reducing index | | 120 | 120 | 110 | 95 | 95 | 110 |
| | Ride comfort | | 3.5 | 3.5 | 3.5 | 3.5 | 3.5 | 3.5 |
| | Straight running stability | | 3.5 | 3.5 | 3.5 | 3.5 | 3.5 | 3.5 |
| | Cornering property | | 4.0 | 4.0 | 4.0 | 3.5 | 4.0 | 4.0 |

**Table 3 Specification of tire and evaluation result**

| | | | Example 7 | Comp. example 7 | Example 8 | Example 9 | Comp. example 8 | Comp. example 9 |
|---|---|---|---|---|---|---|---|---|
| Carcass ply | Carcass cord | Material | Aramid | Nylon | Rayon | Rayon | Nylon | Nylon |
| | | Structure | 800dtex/2 | 1400dtex/2 | 1840dtex/2 | 1840dtex/2 | 1400dtex/2 | 1400dtex/2 |
| First belt ply | Belt cord | Material | Aramid | Aramid | Aramid | Aramid | Aramid | Nylon |
| | | Structure | 800dtex/2 | 800dtex/2 | 800dtex/2 | 800dtex/2 | 800dtex/2 | 900dtex/2 |
| | | Fineness [dtex] | 1600 | 1600 | 1600 | 1600 | 1600 | 1800 |
| | | Angle [°] | 80 | 80 | 80 | 80 | 80 | 80 |
| | | Density [ends/5cm] | 30 | 20 | 20 | 30 | 30 | 43 |
| Second belt ply | Belt cord | Material | Aramid | Aramid | Aramid | Aramid | Aramid | Nylon |
| | | Structure | 800dtex/2 | 800dtex/2 | 800dtex/2 | 800dtex/2 | 800dtex/2 | 900dtex/2 |
| | | Fineness [dtex] | 1600 | 1600 | 1600 | 1600 | 1600 | 1800 |
| | | Angle [°] | -80 | -80 | -80 | -80 | -80 | -80 |
| | | Density [ends/5cm] | 30 | 20 | 20 | 30 | 30 | 43 |
| Band ply | Band cord | Material | Steel | Aramid | Aramid | Aramid | Aramid | Steel |
| | | Structure | 3×3/0.17 | 1670dtex/3 | 1670dtex/3 | 1670dtex/3 | 1670dtex/3 | 3×3/0.17 |
| Running test | Lap time index | | 100 | 100 | 100 | 100 | 95 | 95 |
| | Lap time reducing index | | 110 | 100 | 120 | 120 | 100 | 95 |
| | Ride comfort | | 3.5 | 3.5 | 3.5 | 3.5 | 3. 5 | 3.5 |
| | Straight running stability | | 4.0 | 3.5 | 4.0 | 4.0 | 3.5 | 3.5 |
| | Cornering property | | 4.0 | 3. 5 | 4.0 | 4.0 | 3.5 | 3.5 |

As shown in the Tables 1, 2 and 3, the tire according to each of the examples can prevent the ride comfort from being damaged and is excellent in the straight running stability and the cornering property. From the result of the evaluation, the advantages of the present invention are apparent. The above description is only illustrative and various changes can be made without departing from the scope of the present invention.

## Claims

1. A tire (18) for a motorcycle comprising a pair of beads (24), a carcass (26) laid over both of the beads (24), a belt (28) positioned on an outside in a radial direction of the carcass (26), and a band (30) positioned on an outside in the radial direction of the belt (28),
wherein the carcass (26) includes a carcass ply (44) having a carcass cord,
the carcass cord is constituted by a rayon fiber or an aramid fiber,
the belt (28) includes a belt ply (46, 48) having a belt cord (52, 56),
the belt cord (52, 56) is constituted by an aramid fiber,
an absolute value of an angle formed by the belt cord (52, 56) with respect to an equator plane (CL) is equal to or greater than 60 degrees and is equal to or smaller than 90 degrees,
the band (30) includes a band ply (50) having a band cord,
the band cord is wound spirally in a substantially circumferential direction, and
an absolute value of an angle formed by the band cord with respect to the equator plane (CL) is equal to or smaller than 5 degrees,
**characterized in that**
the belt cord (52, 56) has a fineness which is equal to or greater than 1400 dtex and is equal to or smaller than 1600 dtex,
the belt cord (52, 56) has a density which is equal to or higher than 20 ends / 5 cm and is equal to or lower than 30 ends / 5 cm.

2. The tire according to claim 1, wherein the band cord is constituted by an aramid fiber or steel.

3. The tire according to claim 1 or 2, wherein the absolute value of the angle formed by the belt cord (52, 56) with respect to the equator plane (CL) is equal to or greater than 80 degrees.

## Patentansprüche

1. Reifen (18) für ein Motorrad, der ein Paar Wülste (24), eine Karkasse (26), die über die beiden Wülste (24) gelegt ist, einen Gürtel (28), der an einer Außenseite in einer radialen Richtung der Karkasse (26) angeordnet ist, und ein Band (30) umfasst, das an einer Außenseite in der radialen Richtung des Gürtels (28) angeordnet ist,
wobei die Karkasse (26) eine Karkasslage (44), die einen Karkasskord aufweist, umfasst,
der Karkasskord durch eine Rayonfaser oder eine Aramidfaser gebildet ist,
der Gürtel (28) eine Gürtellage (46, 48), die einen Gürtelkord (52, 56) aufweist, umfasst,
der Gürtelkord (52, 56) durch eine Aramidfaser gebildet ist,
wobei ein Absolutwert eines Winkels, der durch den Gürtelkord (52, 56) gebildet ist, mit Bezug auf eine Äquatorebene (CL) gleich oder größer als 60 Grad und gleich oder kleiner als 90 Grad ist,
das Band (30) eine Bandlage (50), die einen Bandkord aufweist, umfasst,
der Bandkord spiralförmig in im Wesentlichen einer Umfangsrichtung gewickelt ist, und
ein Absolutwert eines Winkels, der durch den Bandkord mit Bezug auf die Äquatorebene (CL) gebildet ist, gleich oder kleiner als 5 Grad ist,
**dadurch gekennzeichnet, dass**
der Gürtelkord (52, 56) eine Feinheit aufweist, die gleich oder größer als 1400 dtex und gleich oder kleiner als 1600 dtex ist,
der Gürtelkord (52, 56) eine Dichte aufweist, die gleich oder höher als 20 Enden/5 cm und gleich oder niedriger als 30 Enden/5cm ist.

2. Reifen nach Anspruch 1, wobei der Bandkord durch eine Aramidfaser oder Stahl gebildet ist.

3. Reifen nach Anspruch 1 oder 2, wobei der Absolutwert des Winkels, der durch den Gürtelkord (52, 56) gebildet ist, mit Bezug auf die Äquatorebene (CL) gleich oder größer als 80 Grad ist.

## Revendications

1. Pneumatique (18) pour une motocyclette, comprenant une paire de talons (24), une carcasse (26) posée par-dessus les deux talons (24), une ceinture (28) positionnée sur un côté extérieur, dans une direction radiale, de la carcasse (26), et une bande (30) positionnée sur un côté extérieur dans la direction radiale de la ceinture (28),
dans lequel la carcasse (26) inclut une nappe de carcasse (44) ayant un câblé de carcasse,
le câblé de carcasse est constitué par une fibre de rayonne ou par une fibre aramide,
la ceinture (28) inclut une nappe de ceinture (46, 48) ayant un câblé de ceinture (52, 56),
le câblé de ceinture (52, 56) est constitué par une fibre aramide,
une valeur absolue d'un angle formé par le câblé de ceinture (52, 56) par rapport à un plan équatorial (CL) est égale ou supérieure à 60° et est égale ou inférieure à 90°,
la bande (30) inclut une nappe de bande (50) ayant un câblé de bande, le câblé de bande est enroulé en spirale dans une direction sensiblement circonférentielle, et
une valeur absolue d'un angle formé par le câblé de bande par rapport au plan équatorial (CL) est égale ou inférieure à 5°,
**caractérisé en ce que**
le câblé de ceinture (52, 56) a une finesse qui est égale ou supérieure à 1400 dtex et qui est égale ou inférieure à 1600 dtex,
le câblé de ceinture (52, 56) a une densité qui est égale ou supérieure à 20 fils/5 cm et qui est égale ou inférieure à 30 fils/5 cm.

2. Pneumatique selon la revendication 1, dans lequel le câblé de bande est constitué par une fibre aramide ou en acier.

3. Pneumatique selon la revendication 1 ou 2, dans lequel la valeur absolue de l'angle formé par le câblé de ceinture (52, 56) par rapport au plan équatorial (CL) est égale ou supérieure à 80°.
